# FASCICULE DE BREVET EUROPEEN

(11) **EP 0 451 108 B1**
(45) Date de publication et mention de la délivrance du brevet: **30.11.1994**
(21) Numéro de dépôt: 91810230.2
(22) Date de dépôt: 28.03.1991
(51) Int. Cl.: B29C 47/08

(54) **Dispositif de raccordement étanche d'une tête d'extrusion d'une ligne à fonctionnement continu, à un bloc de raccordement fixe**
Vorrichtung zum dichten Verbinden eines Extrusionskopfes mit einem fixen Block in einer kontinuierlich arbeitenden Fertigungsstrasse
Sealing means between an extrusion head and a fixed block in a continuous extrusion process

(30) Priorité: 03.04.1990 CH 1117/90
(43) Date de publication de la demande: 09.10.1991
(73) Titulaire: NOKIA-MAILLEFER HOLDING S.A., 1024 Ecublens-Lausanne (CH)
(72) Inventeur: Magnollay, Gilbert, CH-1033 Cheseaux (CH); Seigneur,Rémy, CH-1603 Grandvaux (CH); Budry, Jacques, CH-1054 Morrens (CH); Clément, Jean-Claude, CH-1024 Ecublens (CH); Jaccottet, Michel, CH-1024 Ecublens (CH); Jaggi, Pierre-Yves, CH-1004 Lausanne (CH); Jaun, Hans, CH-1093 La Conversion (CH); de Boer, Philip, CH-1195 Bursinel (CH)
(74) Mandataire: Fischer, Franz Josef

(56) Documents cités:
- EP-A- 0 246 142
- FR-A- 2 481 998
- FR-A- 2 567 983
- FR-A- 2 601 619
- GB-A- 2 083 401
- US-A- 3 632 279
- US-A- 3 779 063
- US-A- 4 154 081
- US-A- 4 277 338
- PATENT ABSTRACTS OF JAPAN vol. 13, no. 434 (M-875)(3782) 28 Septembre 1989& JP-A-01 166 928 (MATSUSHITA ELECTRIC WORKS LTD) 30 Juin 1989

## Description

La présente invention concerne un bloc de raccordement étanche d'une tête d'extrusion d'une ligne à fonctionnement continu, à un bloc de raccordement fixe, prévu pour une ligne d'extrusion comportant deux têtes d'extrusion ainsi qu'un appareil d'échange desdites têtes.

La construction d'un tel appareil implique des moyens perfectionnés pour permettre un raccordement étanche entre une tête d'extrusion qui se trouve en position de travail et le ou les canaux par lesquels la matière plastique parvient dans l'orifice de sortie de la pièce de raccordement. En effet, le raccordement doit pouvoir être établi très rapidement et d'une façon parfaite, en évitant aussi bien des fuites de matière plastique vers l'extérieur, cette matière plastique se trouvant sous haute pression et à température élevée, que, le cas échéant, des perturbations dans l'écoulement au contact d'irrégularités dans les parois qui limitent les conduits. Jusqu'à maintenant, aucun dispositif connu n'assurait ces exigences de manière satisfaisante.

Le brevet US-A-3 632 279 décrit une pince permettant de fixer une tête d'extrusion sur un cylindre d'extrudeuse. L'étanchéité du dispositif est difficilement obtenue puisqu'elle est reportée au niveau des surfaces de contact entre une face de la tête d'extrusion et une portion de l'extrémité du cylindre. D'autre part, les canaux de sortie du distributeur débouchant directement dans une cavité de la tête d'extrusion, on a des régions où la vitesse du flux est faible, voire nulle, ce qui peut conduire à une dégradation de la matière extrudée dans ces régions.

Le but de la présente invention est donc de réaliser un dispositif de raccordement étanche, capable de fonctionner automatiquement dans un appareil d'échange de têtes d'extrusion.

Dans ce but, l'objet de la présente invention est un dispositif de raccordement étanche d'une tête d'extrusion d'une ligne à fonctionnement continu, à un bloc de raccordement fixe selon la revendication 1, et un appareil d'échange de tête d'extrusion selon la revendication 6.

On va décrire ci-après, à titre d'exemple, une forme de réalisation de l'objet de l'invention en se référant au dessin annexé dont

la fig. 1 est une vue en plan de dessus d'un appareil d'échange de têtes d'extrusion, cette vue étant schématique et représentée à petite échelle,

la fig. 2 est une vue en élévation schématique de la tête d'extrusion en position de travail et d'une pince de verrouillage, et

la fig. 3 est une vue en plan de dessus partiellement coupée et schématique représentant la pince de verrouillage.

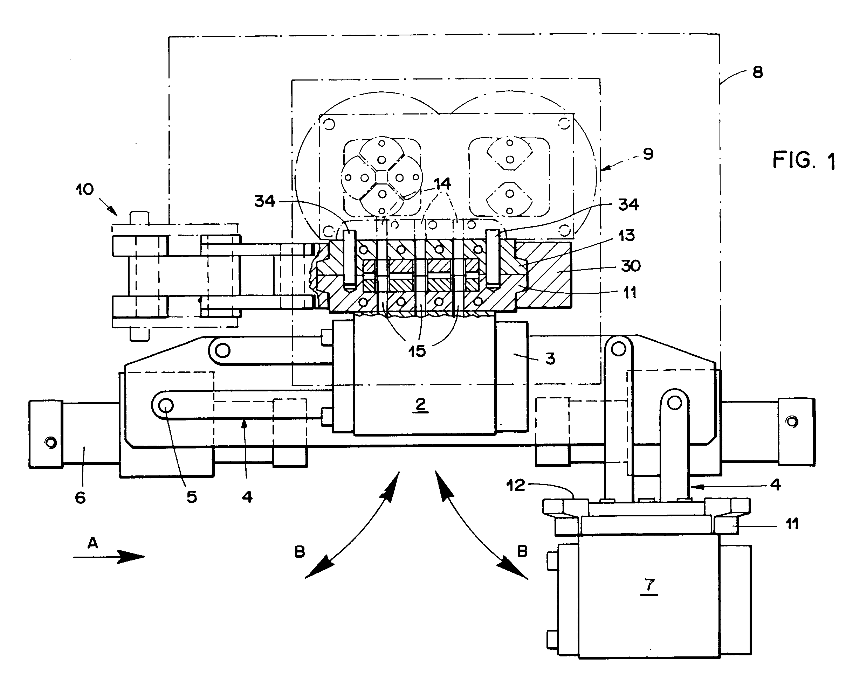

La fig. 1 permet de comprendre les fonctions que doivent remplir les divers éléments de l'appareil qui sera décrit ci-après.

Schématiquement, on voit à la fig. 1, une zone d'une ligne d'extrusion dans laquelle un fil métallique est pourvu d'un enrobage de matière plastique extrudée déposé sur le fil selon des opérations relativement complexes. Au dessin, la direction de l'axe de la ligne est désignée par la flèche A et le fil est supposé se déplacer de gauche à droite, bien qu'il puisse également être agencé de façon à se déplacer dans l'autre sens. Une tête d'extrusion 2 est représentée en position de travail. Le fil pénètre à nu dans l'ouverture située sur la face gauche de la tête d'extrusion 2 et il sort du côté droit de cette tête d'extrusion à travers une filière 3. Cette filière constitue un élément d'un outillage d'extrusion qui peut être plus ou moins complexe et qui est agencé de façon à former, sur le fil, un enrobage comportant plusieurs parties, par exemple un enrobage multi-couches ou un enrobage dans lequel une couche extérieure présente des veines ayant une autre apparence que le reste de l'enrobage. On sait que des fils de ce genre sont utilisés comme conducteurs électriques, notamment dans l'industrie de l'automobile. Un autre cas d'application de l'appareil d'échange décrit ici est la fabrication de câbles, par exemple de câbles à basse tension ou même de câbles à moyenne tension.

La tête 2 est supportée par un premier ensemble mobile 4, qu'il n'est pas nécessaire de décrire en détail ici, mais qui peut effectuer un mouvement de rotation autour d'un axe défini par le pivot 5. Un vérin 6 permet de commander ces mouvements de rotation qui impriment alors à la tête 2 un mouvement de translation circulaire, permettant de l'amener dans une position symétrique à celle d'une tête 7 qui, elle, se trouve, à la fig. 1, en position de préparation. La tête 7 est associée à un second ensemble mobile 4 symétrique du premier et effectuant les mêmes mouvements en sens inverse.

Les flèches B indiquent les mouvements de translation circulaire des têtes 2 et 7. Une embase 8 commune aux ensembles mobiles 4 porte, en outre, un bloc de raccordement 9 auquel est associée une pince de verrouillage 10. En effet, comme on le voit à la partie à droite en bas de la fig. 1, chaque tête d'extrusion, utilisée avec l'appareil d'échange décrit, comporte une pièce de raccordement 11 qui est rigidement fixée contre une de ses faces perpendiculaires à l'axe du mouvement de pivotement des ensembles mobiles 4. Une surface plane 12 de la pièce de raccordement 11 est en contact avec une surface plane homologue d'une pièce de raccordement 13 qui est fixe et solidaire du bloc de raccordement 9. Lorsque le mouvement d'un ensemble mobile a amené la tête d'extrusion que cet ensemble porte dans la position de travail, la pince de verrouillage 10 est actionnée de façon que les deux pièces de raccordement homologues 13 et 11, qui se trouvent en regard l'une de l'autre, soient rigidement fixées l'une à l'autre et que le raccordement des canaux qui conduisent la matière plastique entre la ou les extrudeuses (non représentées) alimentant la tête d'extrusion et cette dernière soit réalisé de façon étanche, à l'épreuve des températures et des pressions en oeuvre dans les procédés d'extrusion.

A la fig. 1, qui est une figure schématique, on voit que la pièce de raccordement 13 est connectée à trois conduits de matière plastique désignés par 14, ces conduits traversant le bloc de raccordement pour aboutir à des orifices d'entrée connectés aux extrudeuses. Le nombre et le mode de raccordement des conduits 14 aux extrudeuses ne présentent pas de particularités pouvant poser des problèmes à l'homme du métier. Il n'est donc pas nécessaire de les décrire. La pièce fixe 13 porte deux goupilles de positionnement 34 pour la pièce 11.

En revanche, il est important que le serrage des pièces 11 et 13 soit réalisé d'une manière simple, automatique et fiable, c'est-à-dire qu'une fois le verrouillage effectué, les raccords entre les conduits 14 et des conduits 15 internes à la tête d'extrusion et à la pièce de raccordement 11, soient étanches.

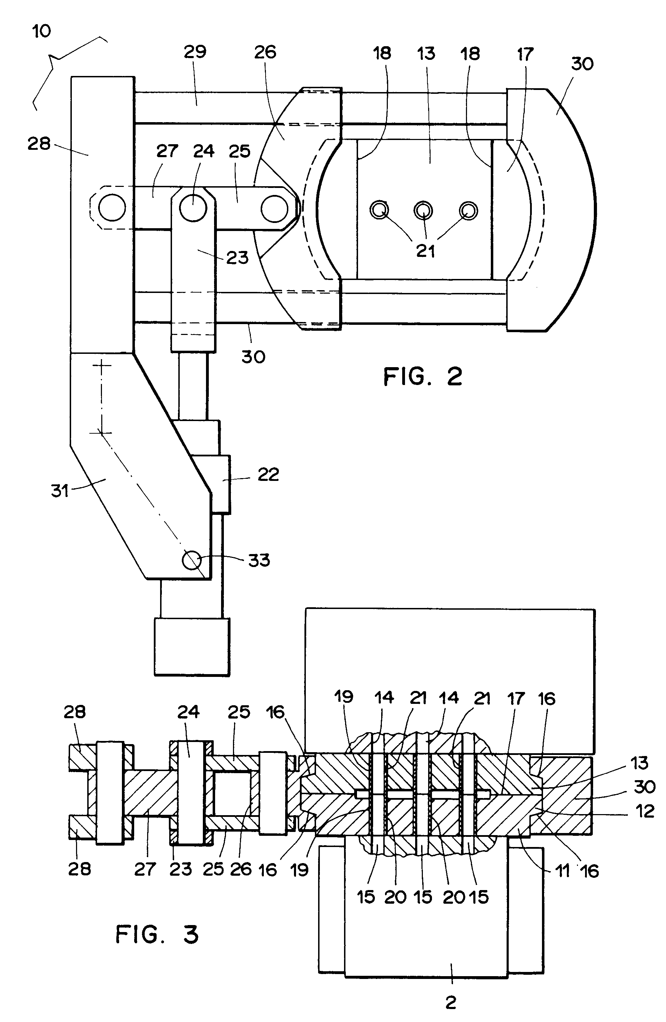

Les fig. 2 et 3 montrent schématiquement, respectivement, la construction des moyens de verrouillage et la construction des moyens d'étanchéité prévus.

En ce qui concerne les moyens d'étanchéité (fig. 3), la disposition des pièces de raccordement 11 et 13 est plus particulièrement visible à cette figure. On voit également à la fig. 2 la forme extérieure des pièces 11 et 13, qui est celle d'un rectangle allongé dans le sens horizontal, présentant des extrémités arrondies en arc de cercle. Les pièces 11 et 13 sont des plaques dont les côtés arrondis présentent des biseaux, désignés par 16, s'étendant en arc de cercle. A la face plane 12 de la pièce 11 correspond une face plane 17 de la pièce 13, et chacune de ces faces présentent, dans son centre, une creusure limitée par des bords verticaux 18. Dans le fond de ces creusures sont ménagés des alésages cylindriques 19 qui correspondent aux conduits 14 et 15. Des douilles 20 et 21 sont chassées dans les alésages 19, de façon que leurs extrémités soient proéminentes dans les creusures 18. Les dimensions et le matériau des douilles seront choisis de façon que, lors du verrouillage, quand les faces 12 et 17 sont amenées en contact l'une avec l'autre, les extrémités des douilles soient pressées les unes contre les autres et que chaque douille subisse une légère déformation élastique, assurant ainsi l'étanchéité. On remarque qu'il y a chaque fois une légère différence de diamètre entre l'un des conduits 14 ou 15 et l'alésage 19 de la pièce de raccordement, de sorte que les douilles sont appuyées dans le fond des alésages 19 et que seule leur partie faisant saillie hors du fond des creusures 18 peut être déformée.

Il reste à décrire la pince de verrouillage permettant de réaliser automatiquement la liaison. Cette pince de verrouillage comporte tout d'abord un vérin 22, dont le cylindre est fixe par rapport au bloc de raccordement 9. La tige du vérin se déplace verticalement à la fig. 2 et porte à son extrémité supérieure un étrier 23 dont les extrémités supérieures des deux branches supportent un tourillon 24. Ce dernier traverse deux biellettes 25 qui relient l'étrier 23 à une première griffe 26 et, d'autre part, une biellette 27 qui relie le tourillon 24 à un élément de cadre 28. Cet élément de cadre 28 est solidaire de deux tiges 29 et 30 qui coulissent dans des alésages de la griffe 26 et dont les extrémités portent la griffe 30.

Le cadre 28 est lui-même relié, par un support 31, à une articulation 33 sur le cylindre de vérin 22.

On se rend compte que si, à partir de la position représentée à la fig. 2, la tige du vérin est déplacée de façon à se rétracter dans le cylindre, les deux griffes 26 et 30 sont écartées l'une de l'autre, par l'action de la genouillère 23, 27, 25. Les griffes 26 et 30 présentent des gorges internes en arc de cercle, avec des flancs obliques qui correspondent aux biseaux 16 des pièces de raccordement 11 et 13, de sorte que, lorsqu'elles sont en position rapprochée (fig. 2), les griffes 30 et 26 exercent sur les pièces 11 et 13 des forces qui les plaquent l'une contre l'autre et qui, par conséquent, établissent la connexion entre les douilles déformables 20 et 21.

La pince de verrouillage et le bloc de raccordement décrits ci-dessus peuvent être conçus de manière à permettre des raccordements variés et à être applicables dans un très grand nombre de cas où des extrusions multiples doivent être effectuées à partir de plusieurs extrudeuses, mais en utilisant une même tête d'extrusion avec un outillage adéquat. L'échange et le raccordement d'une tête d'extrusion peuvent donc être effectués dans des conditions rationnelles, sans nécessiter un arrêt de longue durée de la ligne d'extrusion et, par conséquent, sans risque de perturbation au fonctionnement des diverses extrudeuses. Celles-ci conservent leur régime de température, ce qui représente un avantage considérable pour la fiabilité de la ligne et la qualité des enrobages effectués.

## Revendications

1. Dispositif de raccordement étanche d'une tête d'extrusion (2,7) d'une ligne à fonctionnement continu, à un bloc de raccordement fixe (9), alimenté par au moins une extrudeuse, comportant, d'une part, sur la tête d'extrusion et, d'autre part, sur le bloc de raccordement, des pièces de raccordement homologues (11,13), et une pince de verrouillage (26,30) mécanisée coopérant avec les pièces de raccordement pour les fixer, caractérisé en ce qu'au moins une paire de conduits homologues (19) ménagés dans les pièces de raccordement est pourvue de douilles (20,21) proéminentes par rapport à une surface plane de contact (12,17) entre les pièces de raccordement, et en ce que la pince de verrouillage presse les surfaces de contact des deux pièces de raccordement homologues l'une contre l'autre, de manière telle que l'étanchéité des raccords soit assurée par déformation élastique des douilles.

2. Dispositif selon la revendication 1, caractérisé en ce que chaque pièce de raccordement (11,13) présente deux surfaces arrières biseautées (16), et en ce que la pince de verrouillage comporte deux griffes (26,30) présentant chacune une paire de joues qui agissent sur les surfaces arrières des deux pièces de raccordement à serrer, par un déplacement centripète des griffes dans une direction parallèle au plan des surfaces de contact (12,17).

3. Dispositif selon la revendication 1, caractérisé en ce que chaque pièce de raccordement (11,13) comporte pour chaque conduit (14) un alésage cylindrique (19) débouchant dans une échancrure (18) ménagée dans la surface de contact, une douille proéminente (20,21) étant engagée sans jeu dans chaque alésage et appuyée contre un épaulement au fond de l'alésage.

4. Dispositif selon la revendication 1, caractérisé par un mécanisme à genouillère (23,25,27) actionné par un seul vérin (22) et provoquant le déplacement symétrique centripète des griffes (26,30).

5. Dispositif selon la revendication 1, caractérisé par un bloc de raccordement fixe (9)comportant plusieurs canaux (14) et muni d'une pièce de raccordement (13) dont les douilles (21) sont connectées auxdits canaux de raccordement, le bloc de raccordement comportant en outre des moyens de liaison à une ou plusieurs extrudeuses capables d'alimenter les canaux de raccordement, et par un bloc de raccordement (11) solidaire d'une tête d'extrusion (2), comportant le même nombre de conduits (15) que le bloc fixe, également équipés de douilles (20).

6. Appareil d'échange de tête d'extrusion (2,7) comportant un dispositif de raccordement étanche de blocs de raccordement solidaires (11, 13), l'un (13) d'au moins une extrudeuse et l'autre (11) d'une tête d'extrusion, ces blocs de raccordement étant équipés de pièces de raccordement homologues (11,13), une pince de verrouillage mécanique (26,30) coopérant avec les pièces de raccordement, caractérisé en ce que lesdites pièces de raccordement (11,13) comportent au moins une paire de conduits homologues (19) pourvus de douilles (20,21) proéminentes par rapport à une surface de contact (12,17) entre les pièces de raccordement, et en ce que la pince de verrouillage presse lesdites surfaces de contact l'une contre l'autre, de manière telle que l'étanchéité des conduits est assurée par déformation élastique des douilles.

## Claims

1. A device for fluid-tight connection of an extrusion head (2,7) of a continuously-operating extrusion line to a fixed connection unit (9) fed by at least one extruder, having, on the one hand, on the extrusion head, and on the other hand, on the connection unit, matching connection parts (11,13), and a mechanized locking clamp (26,30) cooperating with said connection parts for fixation thereof, characterized in that at least one pair of homologous ducts (19) respectively contrived in said connection parts is provided with sockets (20,21) projecting with respect to a plane contact surface (12,17) between the connection parts and in that the locking clamp presses the contact surfaces of the two matching connection parts against one another in such a way that the fluid-tightness of the connections is assured by elastic deformation of the sockets.

2. The device according to claim 1, characterized in that each connection part (11,13) has two bevelled rear surfaces (16), and in that the locking clamp comprises two jaws (26,30), each of said jaws having a pair of cheeks which act upon the rear surfaces of the two connection parts to grip by a centripetal movement of the jaws in a direction parallel to the plane of the contact surfaces (12,17).

3. The device according to claim 1, characterized in that each connection part (11,13) comprises for each conduit (14) a cylindrical bore (19) opening into an indentation (18) contrived in the contact surface, a protuberant socket (20,21) being fitted without play in each bore and pressing against a shoulder at the bottom of the bore.

4. The device according to claim 1, characterized by a knuckle-joint mechanism (23,25,27) actuated by a single jack (22) and causing the symmetrical centripetal movement of the jaws (26,30).

5. The device according to claim 1, characterized by a fixed connection unit (9) having a plurality of conduits (14) and provided with a connection part (13) whose sockets (21) are connected to said conduits of connection, the connection unit further having means for attachment to one or more extruders capable of feeding the conduits of connection, and characterized by a further connection unit (11) integral with an extrusion head (2), having the same number of conduits (15) as the fixed unit, and similarly equipped with sockets (20).

6. An extrusion head exchanging apparatus (2,7) comprising a device for fluid-tight connection of connection units, one (13) of said connection units being integral with at least one extruder and the other (11) with an extrusion head, said connection units being equipped with matching connection parts (11,13), a mechanized locking clamp (26,30) co-operating with said connection parts, characterized in that said connection parts (11,13) comprise at least one pair of homologous ducts (19) provided with sockets (20,21) protuberant with respect to a contact surface (12,17) between the connection parts, and in that the locking clamp presses said contact surfaces against one another in such a way that the fluid-tightness of the connections is ensured by elastic deformation of said sockets.

## Patentansprüche

1. Vorrichtung zum dichten Verbinden eines Extrusionskopfes (2, 7) mit einem fixen Block (9) in einer kontinuierlich arbeitenden Fertigungsstrasse, ausgestattet mit mindestens einem Extruder, der einerseits auf dem Extrusionskopf und andererseits auf dem Block passende Verbindungsstücke (11, 13) und eine mechanische Verriegelungszange (26, 30) aufweist, die mit den Verbindungsstücken zur Fixierung zusammenwirkt, dadurch gekennzeichnet, dass mindestens ein Paar von entsprechenden Leitungen (19), angebracht in den Verbindungsstücken, mit im Vergleich mit einer ebenen Kontaktfläche (12, 17) zwischen den Verbindungsstücken vorstehenden Hülsen (20, 21) versehen ist, und dass die Verriegelungszange die Kontaktoberflächen der zwei entsprechenden Verbindungsstücke gegeneinander drückt, so dass die Dichtheit des Uebergangs durch eine elastische Verformung der Hülsen gewährleistet ist.

2. Vorrichtung nach Anspruch 1, dadurch gekennzeichnet, dass jedes Verbindungsstück (11, 13) zwei abgeschrägte hintere Flächen aufweist, und dass die Verriegelungszange zwei Greifer umfasst, wovon jede ein Paar von Backen umfasst, welche auf die hinteren Flächen der zwei Verbindungsstücke wirken und diese durch ein zentripetales Verschieben der Greifer in paralleler Richtung zur Ebene der Kontaktflächen (12, 17) zusammendrücken.

3. Vorrichtung nach Anspruch 1, dadurch gekennzeichnet, dass jedes Verbindungsstück (11, 13) für jede Leitung (14) eine zylindrische Bohrung (19) aufweist, die in eine in die Kontaktfläche angebrachte Aussparung mündet, wobei eine vorstehende Hülse (20, 21) spielfrei in jede Bohrung eingesetzt und gegen eine Schulter am Grund der Bohrung abgestützt ist.

4. Vorrichtung nach Anspruch 1, gekennzeichnet durch einen Gelenkmechanismus (23, 25, 27), betätigt durch einen einzigen Hebel (22), welcher die symmetrische zentripetale Verschiebung der Greifer (26, 30) bewirkt.

5. Vorrichtung nach Anspruch 1, gekennzeichnet durch einen festen Block (9), der mehrere Kanäle (14) umfasst und mit einem Verbindungsstück (13) ausgestattet ist, dessen Hülsen (21) mit den genannten Verbindungskanälen verbunden sind, wobei der Block ausserdem Mittel zur Verbindung mit einem oder mehreren Extruder aufweist, welche fähig sind, die Kanäle zu versorgen, und durch einen mit einem Extrusionskopf (2) verbundenen Block (11), der die gleiche Anzahl von Leitungen umfasst, wie der feste Block, und ebenfalls mit Hülsen (20) ausgestattet ist.

6. Wechselapparat (2, 7) für Extrusionsköpfe, versehen mit einer Vorrichtung zum dichten Verbinden der Blöcke (11, 13), wovon der eine (13) mit mindestens einem Extruder und der andere (11) mit einem Extrusionskopf verbunden ist, wobei diese Blöcke mit passenden Verbindungsstücken (11, 13) und einer mechanischen Verriegelungszange (26, 30), die mit den Verbindungsstücken zusammenwirkt, ausgerüstet ist, dadurch gekennzeichnet, dass die genannten Verbindungsstücke (11, 13) mindestens ein Paar passender Leitungen (19) umfassen, die mit im Vergleich mit einer ebenen Kontaktfläche (12, 17) zwischen den Verbindungsstücken vorstehenden Hülsen (20, 21) versehen sind, und dass die Verriegelungszange die Kontaktoberflächen der zwei entsprechenden Verbindungsstücke gegeneinander drückt, so dass die Dichtheit des Uebergangs durch eine elastische Verformung der Hülsen gewährleistet ist.
